# EUROPÄISCHE PATENTSCHRIFT

(11) **EP 3 106 022 B1**
(45) Veröffentlichungstag und Bekanntmachung des Hinweises auf die Patenterteilung: **18.03.2020**
(21) Anmeldenummer: 16171881.2
(22) Anmeldetag: 30.05.2016
(51) Int. Cl.: A01F 15/08

(54) **ABLADERAMPE FÜR EINE RUNDBALLENPRESSE**
DISCHARGE RAMP FOR A ROUND BALER
RAMPE DE DECHARGEMENT POUR UNE PRESSE A BALLE RONDE

(30) Priorität: 16.06.2015 DE 102015210999
(43) Veröffentlichungstag der Anmeldung: 21.12.2016
(73) Patentinhaber: Deere & Company, Moline, IL 61265 (US)
(72) Erfinder: Menetrier, Michel, 70100 Beaujeu (FR); Gresset, Pascal, 25870 Auxon Dessous (FR); Delphigue, Didier, 21000 Dijon (FR)
(74) Vertreter: Holst, Sönke

(56) Entgegenhaltungen:
- EP-A1- 1 832 157
- EP-A1- 2 550 854
- EP-A1- 2 893 799
- EP-A2- 1 444 882

## Beschreibung

Die Erfindung betrifft eine Rundballenpresse gemäß dem Oberbegriff des Anspruchs 1.

### Stand der Technik

Rundballenpressen finden Verwendung, um aus halmförmigem landwirtschaftlichem Erntegut Ballen herzustellen. Derartige Rundballenpressen weisen einen Ballenpressraum und zugehörige Pressmittel auf. Nach der Fertigstellung und ggf. Umwicklung eines Ballens mit Netz, Garn oder einer Folie wird dieser nach hinten aus dem Ballenpressraum ausgeworfen. Der Ballen rollt dann auf einer Abladerampe aus dem Ballenpressraum nach unten auf den Erdboden.

Gebräuchliche Abladerampen umfassen einen langgestreckten, als Schweißzusammenbau ausgeführten Träger, der am Gehäuse oder Fahrwerk der Rundballenpresse um eine horizontale, quer zur Vorwärtsrichtung der Rundballenpresse verlaufende Achse schwenkbar angelenkt und durch Zylinder- oder Federkraft nach oben vorgespannt ist (vgl. DE 102 54 954 A1, EP 0 288 600 A1, EP 1 832 157 A1, EP 1 444 882 A2 oder die nachveröffentlichte EP 2 893 799 A1). Wird der Ballen ausgeworfen, bewegt sich der Träger gegen die Kraft der Feder nach unten. Zusätzlich sind vielfach noch Schwingungsdämpfer vorgesehen, um die Schwingungen der Abladerampe beim Aufprall auf dem Boden oder nach der Rückkehr in die obere Ruheposition nach der Ballenabgabe zu dämpfen.

Die EP 2 550 854 A1 zeigt eine Rundballenpresse mit einer Abladerampe, deren hinterer Abschnitt aus in sich flachen Federstreben besteht, die sich unter dem Gewicht des Rundballens elastisch verformen und den Rundballen federnd auf die Erdoberfläche ablegen.

### Aufgabe

Die bisherigen, in sich starren Abladerampen sind relativ (kosten-) aufwändig und schwer. Außerdem besteht das Risiko, dass die Abladerampe und ggf. andere Komponenten der Ballenpresse beschädigt werden können, wenn die Abladerampe in ihrer Ruheposition beispielsweise beim Rückwärtsfahren gegen ein Hindernis stößt. Weiterhin ist die Kontaktfläche zwischen einem nicht-zylindrischen (tonnenförmigen) Ballen und der Abladerampe relativ gering, was zu hohen lokalen Auflagekräften des Ballens auf der Abladerampe führt, die wiederum zu Beschädigungen des Wickelmaterials und zum partiellen oder totalen Auflösen des Ballens führen können. Schließlich kann der Fall auftreten, dass die starre Abladerampe bei unebenem Boden nur an wenigen Stellen in Bodenberührung kommt, was zu Spannungen in der Abladerampe führt, die Materialermüdung zur Folge haben können.

Die Federstreben der EP 2 550 854 A1 erstrecken sich nur über den hinteren Teil der Abladerampe und müssen daher über ihre recht kurze Länge einen relativ großen Federweg zurücklegen, was zu Ermüdungserscheinungen führt.

Das der Erfindung zu Grunde liegende Problem wird darin gesehen, eine Abladerampe für eine Rundballenpresse und eine Rundballenpresse bereitzustellen, bei der die erwähnten Nachteile nicht oder in einem verminderten Maß vorliegen.

### Lösung

Die vorliegende Erfindung wird durch die Patentansprüche definiert.

Eine Abladerampe für eine Rundballenpresse besteht aus einer langgestreckten Trägereinrichtung der einen Endes an der Rundballenpresse angebracht ist und der konfiguriert ist, über seine Länge als Abrollfläche für einen aus der Rundballenpresse ausgeworfenen Ballen auf den Erdboden zu dienen.

Mit anderen Worten werden die Funktionen der bisherigen Feder, der bisherigen Schwenklagerung und des bisherigen Trägers in einer in sich federnden Trägereinrichtung vereint. Die federnde Flexibilität der Trägereinrichtung ermöglicht es, dass dieser die Energie des Ballens beim Abrollen teilweise absorbiert, um die Rotations- und Translationsgeschwindigkeit des Ballens zu vermindern, mit welcher dieser den Erdboden erreicht. Auf diese Weise erspart man sich eine separate Feder zur Vorspannung der Trägereinrichtung und erreicht, dass die Abladerampe relativ leicht und kostengünstig herstellbar ist, gegen Beschädigungen unempfindlich, da nachgiebig, ist und sich an nicht-zylindrische Ballen und/oder unebenen Boden flexibel anpasst.

Die Trägereinrichtung besteht aus einem in sich federnden Material. Bei dem in sich federnden Material kann es sich um Federstahl, Kunststoff oder Gummi handeln.

Die Trägereinrichtung kann einstückig sein oder mehrere seitlich nebeneinander angeordnete Elemente umfassen.

Das federnde Material ist starr am Fahrgestell oder einer Achse der Ballenpresse befestigt nach oben hin vorgespannt und erstreckt sich in der unbelasteten Ruhestellung etwa horizontal. Bei Belastung durch den Ballen erreicht das freie (rückwärtige) Ende der Trägereinrichtung den Erdboden.

Das (in sich federnde) Material der Trägereinrichtung kann auf der Seite der Rundballenpresse C-förmig sein, wobei der untere Schenkel des C mit der Rundballenpresse verbindbar oder verbunden ist und der obere Schenkel des C in die Abrollfläche übergeht. Auch kann das (in sich federnde) Material der Trägereinrichtung ballenabgabeseitig C-förmig sein, wobei der untere Schenkel des C beim Abladen des Ballens in Bodeneingriff gerät und der obere Schenkel des C in die Abrollfläche übergeht.

### Ausführungsbeispiel

In den Zeichnungen sind zwei nachfolgend näher beschriebene Ausführungsbeispiele der Erfindung dargestellt, wobei die Bezugszeichen nicht zu einer einschränkenden Auslegung der Ansprüche herangezogen werden sollen. Es zeigt:
- Fig. 1: eine schematische rückwärtige Ansicht einer Rundballenpresse mit einer ersten Ausführungsform einer Abladerampe,
- Fig. 2: eine schematische rückwärtige Ansicht einer Rundballenpresse mit einer zweiten Ausführungsform einer Abladerampe, und
- Fig. 3a bis 3f: seitliche Ansichten der Rundballenpresse mit der Abladerampe in unterschiedlichen Phasen beim Entladen eines Ballens.

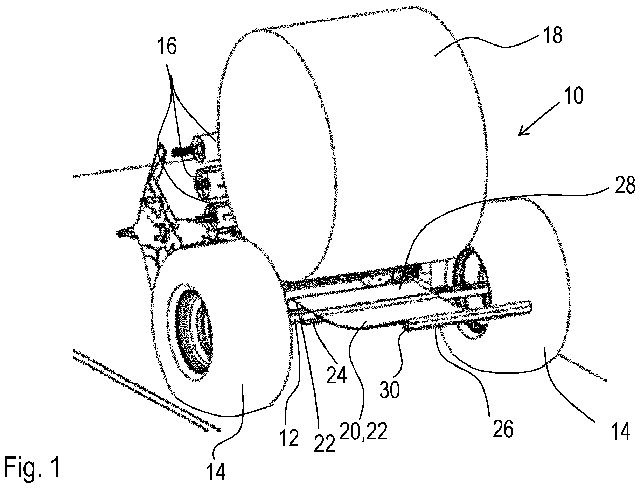

Die Figur 1 zeigt eine schematische perspektivische Ansicht einer Rundballenpresse 10 von rechts hinten. Zur Veranschaulichung sind einige Komponenten der Rundballenpresse 10 weggelassen worden, wie ein Gehäuse, eine Anzahl von Presswalzen und eine rückwärtige Tür. Die Rundballenpresse 10 umfasst ein Fahrgestell mit einer Achse 12, an der Räder 14 befestigt sind. Am Fahrgestell ist auch eine Anzahl an Presswalzen 16 abgestützt, die einen Ballenpressraum umschließen. Ein im Ballenpressraum gebildeter Ballen ist mit 18 gekennzeichnet. Derartige Rundballenpressen 10 sind an sich bekannt, wozu auf den eingangs erwähnten Stand der Technik verwiesen sei. Die Rundballenpresse 10 kann von beliebiger Bauart sein, z.B. mit einem Ballenpressraum fester oder variabler Größe, der von Riemen oder Ketten oder den gezeigten Presswalzen 16 umschlossen sein kann. Der Ballenpressraum kann nach hinten durch eine aufklappbare Tür verschließbar sein oder einen Schwenkteil umfassen, welcher Mittel zur Bildung eines Ballens im Ballenpressraum trägt und zwischen einer Ballenbildungsposition und einer Ballenauswurfposition drehbeweglich ist (s. EP 1 364 574 A1).

An der Achse 12 (oder einem anderen Teil des Fahrgestells der Rundballenpresse 10) ist eine Abladerampe 20 starr (d.h. nicht schwenkbar o.ä.) befestigt, die aus einer langgestreckten Trägereinrichtung 22 besteht. Die Trägereinrichtung 22 besteht aus in sich elastischem, federnden Material, beispielsweise Federstahl. Die Trägereinrichtung 22 umfasst eine langgestreckte, sich von der Achse 12 nach hinten bis zum rückwärtigen Ende der Trägereinrichtung 22 erstreckende Abrollfläche 28, auf welcher der Ballen 18 nach seiner Fertigstellung und ggf. Umwicklung mit Garn, Folie oder Netz nach unten auf den Erdboden abrollt.

An seinem in Vorwärtsrichtung der Ballenpresse 10, die in der Figur 1 nach links vorn verläuft, vorderen Ende ist die Trägereinrichtung 22 C-förmig gestaltet. Der untere Schenkel 24 des C liegt von unten her an der Achse 12 an und ist damit verbunden, z.B. verschraubt. Der vordere Schenkel 22 des C erstreckt sich vom unteren Schenkel 24 etwa vertikal nach oben und der obere Schenkel des C geht in die Abrollfläche 28 über.

Auch an seinem rückwärtigen Ende ist die Trägereinrichtung 22 C-förmig gestaltet. Ein oberer Schenkel des C geht in die Abrollfläche 28 über, ein vertikaler Schenkel 26 des C erstreckt sich nach unten und ein unterer Schenkel 30 des C erstreckt sich nach vorn und kommt, wenn der Ballen 18 auf der Abladerampe 20 herunterrollt, in Bodenkontakt. In der unbelasteten Stellung erstreckt sich die Abrollfläche 28 von der Achse 12 etwa horizontal nach hinten.

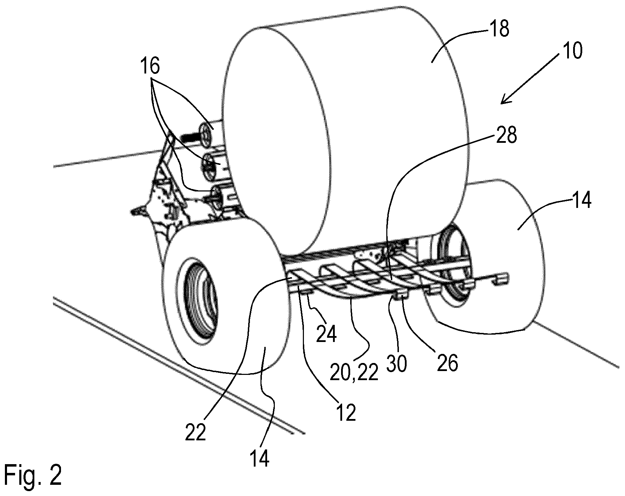

Bei der Ausführungsform nach Figur 2 ist die Trägereinrichtung 22 aus mehreren, seitlich nebeneinander angebrachten Elementen aufgebaut, ansonsten in Aufbau und Funktion mit der Ausführungsform nach Figur 1 identisch. Die Elemente sind rechteckigen Querschnitts, der jedoch auch quadratisch oder kreisförmig sein könnte.

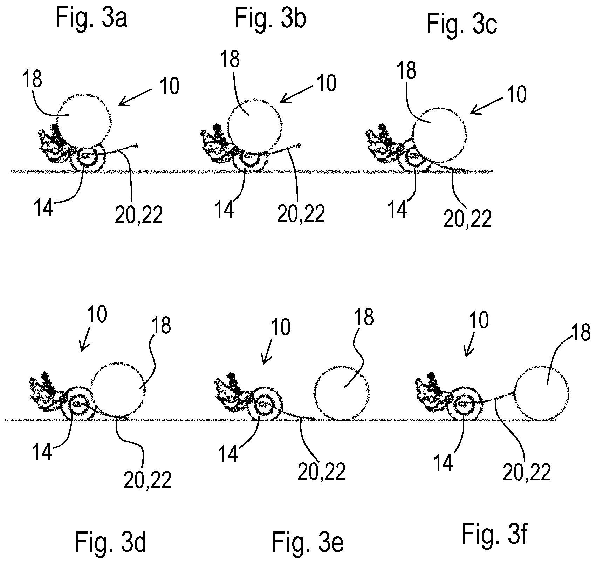

Die Figuren 3a bis 3f zeigen die Funktionsweise der Abladerampe 20 nach Figur 1 und Figur 2. Der aus dem Ballenpressraum gebildete Ballen 18 ist in der Figur 3a noch im Ballenpressraum. Die noch unbelastete Trägereinrichtung 22 erstreckt sich etwa horizontal nach hinten. Wird der Ballen aus dem Ballenpressraum ausgeworfen, gerät er in Auflage auf der Trägereinrichtung 22 (Figur 3b), der durch den Ballen 18 nach unten gebogen wird, und rollt nach und nach auf der sich flexibel durchbiegenden Trägereinrichtung 22 nach unten (Figuren 3c bis 3e). Nachdem der Ballen 18 komplett von der Abladerampe 20 gerollt ist (Figur 3f), federt die Abladerampe 20 wieder nach oben.

Durch die Herstellung der Abladerampe 20 aus in sich elastischem, federnden Material ist sie relativ leichtgewichtige und preiswert herstellbar. Sie passt sich aufgrund ihrer Elastizität der Form des Bodens und des Ballens an, was ungewünschte Einwirkungen auf das Wickelmaterial und Spannungen und Ermüdungserscheinungen im Material der Abladerampe vermeidet. Zudem sind kaum Beschädigungen der Abladerampe 20 zu befürchten, wenn diese beim Rückwärtsfahren gegen ein Hindernis stoßen sollte. An der Abrollfläche 28 könnte noch eine Beschichtung aus Gummi, Stahl, Kunststoff etc. auf der Trägereinrichtung 22 angebracht werden, um Beschädigungen des Wickelmaterials beim Abrollen des Ballens 18 zu vermeiden.

## Patentansprüche

1. Rundballenpresse (10), mit einem Fahrgestell, einem Ballenpressraum und einer Abladerampe (20), die aus einer langgestreckten Trägereinrichtung (22) besteht, der einen Endes an der Rundballenpresse (10) angebracht ist und an dessen Oberseite sich eine Abrollfläche (28) für einen aus der Rundballenpresse (10) ausgeworfenen Ballen (18) befindet, die Trägereinrichtung besteht aus in sich federndem Material, **dadurch gekennzeichnet, dass** der Träger starr am Fahrgestell oder an einer Achse (12) der Ballenpresse (10) befestigt, nach oben hin vorgespannt ist und derart gestaltet ist, das der Träger (22) sich in der unbelasteten Ruhestellung etwa horizontal erstreckt und bei Belastung durch den Ballen (18) mit seinem freien Ende auf dem Boden aufliegt.

2. Rundballenpresse (10) nach Anspruch 1, wobei die Trägereinrichtung (22) einstückig ist.

3. Rundballenpresse (10) nach Anspruch, wobei die Trägereinrichtung mehrere seitlich nebeneinander angeordnete Elemente umfasst.

4. Rundballenpresse (10) nach einem der vorhergehenden Ansprüche, wobei das in sich federnde Material der Trägereinrichtung (22) auf der Seite der Rundballenpresse (10) C-förmig ist, wobei der untere Schenkel (24) des C mit der Rundballenpresse (10) verbunden ist und der obere Schenkel des C in die Abrollfläche (28) übergeht.

5. Rundballenpresse (10) nach einem der vorhergehenden Ansprüche, wobei das in sich federnde Material der Trägereinrichtung (22) ballenabgabeseitig C-förmig ist, wobei der untere Schenkel (30) des C beim Abladen des Ballens (18) in Bodeneingriff gerät und der obere Schenkel des C in die Abrollfläche (28) übergeht.

## Claims

1. Round baler (10) having a chassis, a bale pressing chamber and a discharge ramp (20) that consists of an elongate carrier device (22), which is attached at one end to the round baler (10) and on the top side of which a rolling surface (28) for a bale (18) ejected from the round baler (10) is located, the carrier device consisting of inherently resilient material, **characterized in that** the carrier is fastened rigidly to the chassis or to an axle (12) of the round baler (10), is upwardly preloaded and is designed such that the carrier (22) extends approximately horizontally in the unloaded rest state and rests with its free end on the ground when loaded by the bale (18).

2. Round baler (10) according to Claim 1, wherein the carrier device (22) is in one piece.

3. Round baler (10) according to Claim, wherein the carrier device comprises a plurality of elements arranged laterally alongside one another.

4. Round baler (10) according to one of the preceding claims, wherein the inherently resilient material of the carrier device (22) is C-shaped on the side of the round baler (10), wherein the lower leg (24) of the C is connected to the round baler (10) and the upper leg of the C transitions into the rolling surface (28).

5. Round baler (10) according to one of the preceding claims, wherein the inherently resilient material of the carrier device (22) is C-shaped on the bale-output side, wherein the lower leg (30) of the C comes into contact with the ground during the discharging of the bale (18) and the upper leg of the C transitions into the rolling surface (28).

## Revendications

1. Presse pour balles rondes (10), comprenant un mécanisme de roulement, une chambre de pressage de balle et une rampe de déchargement (20) qui comprend un moyen de support allongé (22) dont une extrémité est fixée à la presse pour balles rondes (10) et sur un côté supérieur duquel se trouve une surface de roulement (28) destinée à une balle (18) éjectée de la presse pour balles rondes (10), le moyen de support étant en un matériau élastique, **caractérisée en ce que** le support est fixé rigidement au mécanisme de roulement ou à un essieu (12) de la presse pour balles (10), est précontraint vers le haut et est conçu de telle sorte que le support (22) s'étende à peu près horizontalement dans la position de repos non chargée et soit en appui sur le sol par son extrémité libre lorsqu'il est chargé par la balle (18).

2. Presse pour balles rondes (10) selon la revendication 1, le moyen de support (22) étant d'une seule pièce.

3. Presse pour balles rondes (10) selon la revendication, le moyen de support comprenant une pluralité d'éléments disposés latéralement les uns à côté des autres.

4. Presse pour balles rondes (10) selon l'une des revendications précédentes, le matériau élastique du moyen de support (22) étant en forme de C du côté de la presse pour balles rondes (10), la branche inférieure (24) du C étant reliée à la presse pour balles rondes (10) et la branche supérieure du C se transformant en la surface de roulement (28).

5. Presse pour balles rondes (10) selon l'une des revendications précédentes, le matériau élastique du moyen de support (22) étant en forme de C du côté de distribution des balles, la branche inférieure (30) du C se transformant en une unité d'engagement avec le sol et la branche supérieure du C se transformant en la surface de roulement (28) lorsque la balle (18) est déchargée.
